# FASCICULE DE BREVET EUROPEEN

(11) **EP 1 097 317 B1**
(45) Date de publication et mention de la délivrance du brevet: **06.03.2002**
(21) Numéro de dépôt: 99929501.7
(22) Date de dépôt: 19.07.1999
(51) Int. Cl.: F16H 37/02, F16H 3/14

(54) **TRANSMISSION A INVERSEUR MONTEE ENTRE UNE BOITE DE VITESSES ET AU MOINS DEUX ROUES MOTRICES**
WENDEGETRIEBE MONTIERT ZWISCHEN EINEM WECHSELGETRIEBE UND MINDESTENS ZWEI ANGETRIEBENEN RÄDERN
TRANSMISSION UNIT WITH REVERSING MECHANISM MOUNTED BETWEEN A GEARBOX AND AT LEAST TWO DRIVE WHEELS

(30) Priorité: 17.07.1998 FR 9809138
(43) Date de publication de la demande: 09.05.2001
(73) Titulaire: Chaure, Michel, 58240 Langeron (FR)
(72) Inventeur: Chaure, Michel, 58240 Langeron (FR)
(74) Mandataire: Bruder, Michel
(86) Numéro de dépôt international: FR9901757
(87) Numéro de publication internationale: WO0004305

(56) Documents cités:
- EP-A- 0 242 338
- DE-A- 1 550 846
- US-A- 4 103 566
- PATENT ABSTRACTS OF JAPAN vol. 008, no. 191 (M-322), 4 septembre 1984 (1984-09-04) & JP 59 081228 A (MAZDA KK), 10 mai 1984 (1984-05-10)

## Description

La présente invention concerne un véhicule automobile à au moins trois roues équipé d'un dispositif de transmission monté entre une boîte de vitesses sans marche arrière, accouplée à un moteur de motocyclette et au moins deux roues motrices à arbres transversaux coaxiaux pour l'entraînement dudit véhicule.

On connaît déjà les transmissions intégrales entre un moteur classique et les roues d'un véhicule automobile intégrant dans un seul ensemble non seulement un jeu de pignons pour étager les vitesses mais encore un inverseur et un différentiel : c'est par exemple le cas dans le brevet EP-0.242.338 ou encore US 4.103.566. Toutefois, ces transmissions sont inadaptées pour équiper des engins à au moins trois roues dont deux motrices, utilisant pour leur propulsion un moteur de motocyclette comportant une boîte de vitesses intégrée. Lorsqu'on envisage d'utiliser un tel moteur de motocyclette pour l'entraînement d'un véhicule automobile à au moins trois roues, apparaît un problème lié au fait que les boîtes de vitesses de motocyclette ne sont pas prévues pour pouvoir effectuer une marche arrière. Or, une telle marche arrière est impérative dans le cas d'un véhicule automobile et même exigée sur certain véhicule de loisir équipé de moteur de motocyclette à l'occasion de compétitions officielles.

On connaît déjà sur ce type de véhicule des kits permettant de modifier les boîtes de vitesses en y ajoutant un inverseur du type train épicycloïdal ; malheureusement cette solution minimale est de surcroît coûteuse. Une autre solution plus répandue consiste à modifier le démarreur électrique pour qu'en inversant son alimentation électrique, il entraîne le véhicule en marche arrière ; ce dispositif est aujourd'hui interdit en compétition.

La présente invention permet de résoudre tous ces problèmes grâce à la prévision d'un dispositif de transmission aisément accouplable à la sortie de la boîte de vitesses d'un moteur de motocyclette et d'un prix de revient relativement bas.

A cet effet, le véhicule automobile à au moins trois roues dont deux roues motrices, dont la motorisation et la transmission sont réalisées à partir d'un moteur et d'une boîte de vitesses de motocyclette ne comportant pas de rapport inverseur pour produire la marche arrière du véhicule est remarquable en ce que le dispositif de transmission est monté entre la boîte de vitesses accouplée au moteur de motocyclette et au moins deux roues motrices à arbres transversaux coaxiaux dudit véhicule automobile et il est constitué par un ensemble unitaire, comportant, à l'intérieur d'un seul et même carter, un inverseur de sens de rotation accouplé entre l'arbre de sortie de la boîte de vitesses, un arbre intermédiaire et un différentiel dont la coquille, portant les satellites, est entraînée en rotation par l'arbre intermédiaire et dont les planétaires sont solidaires des arbres d'entraînement coaxiaux traversant la paroi du carter.

Grâce à la combinaison, dans un même ensemble unitaire, d'un inverseur de sens de rotation et d'un différentiel, de préférence autobloquant, il est possible d'adapter très aisément un groupe moteur-boîte de vitesses de motocyclette à l'entraînement d'un véhicule automobile, en permettant une marche arrière du véhicule et un mouvement de rotation différentiel des roues motrices en virage. Par ailleurs, il est également possible d'utiliser le différentiel en tant que composant d'une boîte de vitesses additionnelle à deux rapports de transmission réducteurs, afin de multiplier par deux le nombre des vitesses obtenu par la boîte de vitesses associée au moteur de motocyclette.

On peut également équiper le différentiel d'un mécanisme comportant un arbre de sortie complémentaire permettant un fonctionnement du véhicule du type 4 X 4.

On décrira ci-après, à titre d'exemple non limitatif, une forme d'exécution de la présente invention en référence aux dessins annexés sur lesquels :

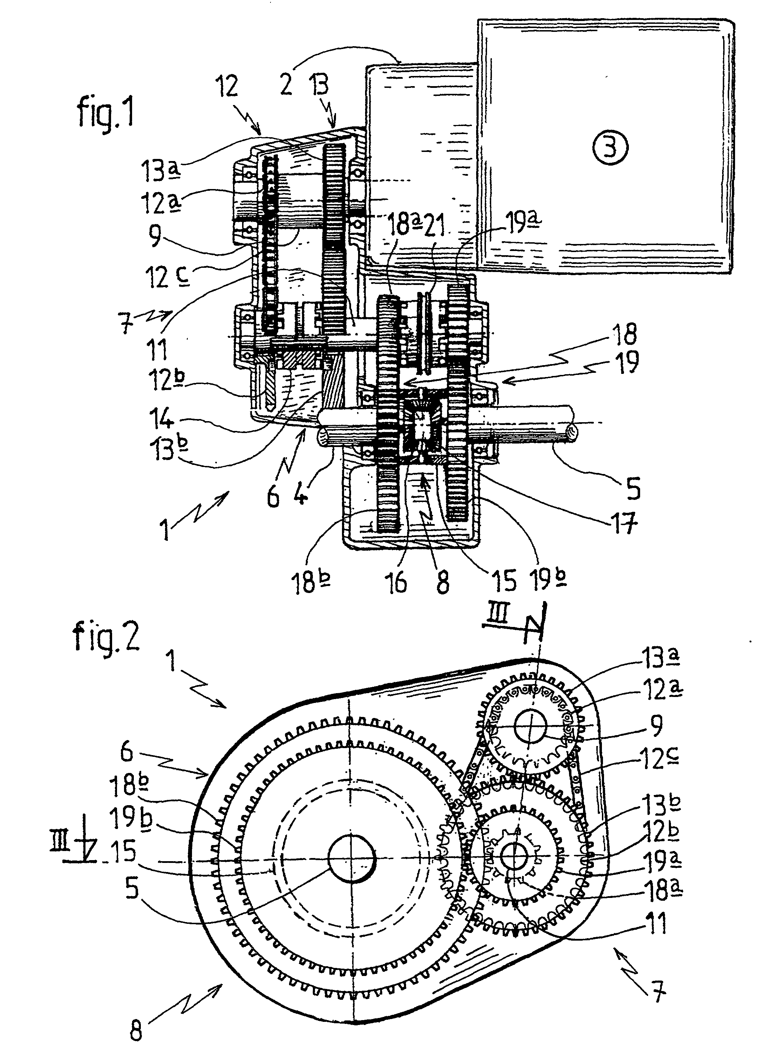

- la figure 1 est une vue en plan schématique d'un dispositif de transmission suivant l'invention.
- la figure 2 est une vue en élévation schématique du dispositif de transmission,
- la figure 3 est une vue en coupe, faite suivant la ligne III/III de la figure 2, d'une forme d'exécution du dispositif de transmission.

Le dispositif de transmission suivant l'invention, désigné dans son ensemble par la référence 1, est destiné à être monté entre une boîte de vitesses 2 accouplée à un moteur de motocyclette 3 et deux roues motrices (non représentées), à arbres transversaux coaxiaux respectifs 4 et 5, d'un véhicule automobile à au moins trois roues. Le dispositif de transmission 1 est constitué par un ensemble unitaire et il comprend, à l'intérieur d'un seul et même carter 6, un inverseur du sens de rotation 7 et un différentiel 8 entraînant en rotation les arbres 4 et 5 des roues motrices.

L'inverseur du sens de rotation 7, logé dans une première partie du carter 6, comporte un arbre d'entrée 9 accouplé à l'arbre de sortie de la boîte de vitesses 2, un arbre intermédiaire cannelé 11 parallèle à l'arbre d'entrée 9 et deux mécanismes de liaison 12 et 13, à rapports de transmission différents, entre l'arbre d'entrée 9 et l'arbre intermédiaire 11. Les mécanismes de liaison 12,13 comportent respectivement un pignon menant 12a,13a solidaires en rotation de l'arbre d'entrée 9 et un pignon mené 12b,13b monté fou sur l'arbre intermédiaire 11. Les pignons menants 12a,13a et menés 12b,13b sont accouplés par des moyens appropriés tels qu'une chaîne, un pignon intermédiaire, de telle façon que les pignons menés 12b,13b soient entraînés en rotation en sens inverse l'un de l'autre. Dans la forme d'exécution non limitative représentée, les pignons menants 12a et menés 12b sont accouplés par une chaîne 12c, de manière à tourner dans le même sens tandis que le pignon menant 13a et le pignon mené 13b sont directement en prise de manière à tourner en sens inverse l'un de l'autre. L'inverseur 7 comporte également un baladeur à crabots 14 monté coulissant sur l'arbre intermédiaire cannelé 11 entre les pignons menés 12b,13b et pourvu sur ses deux faces de crabots pour permettre son accouplement soit avec le pignon mené 12b soit avec le pignon mené 13b. Le mouvement du baladeur est commandé de la manière habituelle par une fourchette pivotante actionnée par un levier de commande accessible à l'utilisateur.

L'arbre intermédiaire cannelé 11 est plus long que l'arbre d'entrée 9 et il s'étend dans une seconde partie du carter 6 contenant le différentiel 8. Ce différentiel comporte, de la manière habituelle, une coquille 15 portant des satellites 16 en prise avec des planétaires 17 respectivement solidaires des arbres d'entraînement 4 et 5. La coquille 15 du différentiel 8 peut être entraînée en rotation directement à partir de l'arbre intermédiaire 11, au moyen d'un train d'engrenage approprié. Toutefois, dans la forme d'exécution préférée, le différentiel 8 constitue un composant d'une boîte de vitesses additionnelle à deux rapports de transmission différents. Cette boîte de vitesses additionnelle, comprend un premier mécanisme de transmission 18, réducteur de vitesse, constitué par un pignon menant 18a de petit diamètre, monté fou sur l'arbre intermédiaire 11, et en prise avec un pignon mené 18b, de plus grand diamètre, solidaire de la coquille 15 du différentiel 8, d'un côté de cette coquille. Un second mécanisme de transmission 19, également réducteur de vitesse, comporte un pignon 19a de petit diamètre, monté fou sur l'arbre cannelé 11 et en prise avec un pignon mené 19b, de plus grand diamètre, solidaire de l'autre côté de la coquille 15 du différentiel 8. La boîte de vitesse additionnelle comporte également un baladeur 21 monté coulissant sur l'arbre intermédiaire cannelé 11 entre les deux pignons menants 18a,19a. Le mouvement de ce baladeur est commandé de la manière habituelle par une fourchette actionnée par un levier de commande accessible à l'utilisateur. Le baladeur 21 est pourvu sur ses deux faces de crabots permettant son accouplement avec l'un ou l'autre des pignons menants 18a, 19a.

D'après la description qui précède, on voit donc que le dispositif de transmission suivant l'invention, associé à une boîte 2 à n vitesses, permet d'obtenir pour les arbres 4,5 entraînant les roues motrices, 2n vitesses aussi bien vers l'avant que vers l'arrière.

On peut ainsi obtenir, sur des véhicules de loisir, par exemple en compétition, n rapports courts pour le slalom et n rapports longs pour le circuit ; de même, on dispose ainsi d'une première courte pour démarrer et n vitesses longues ensuite.

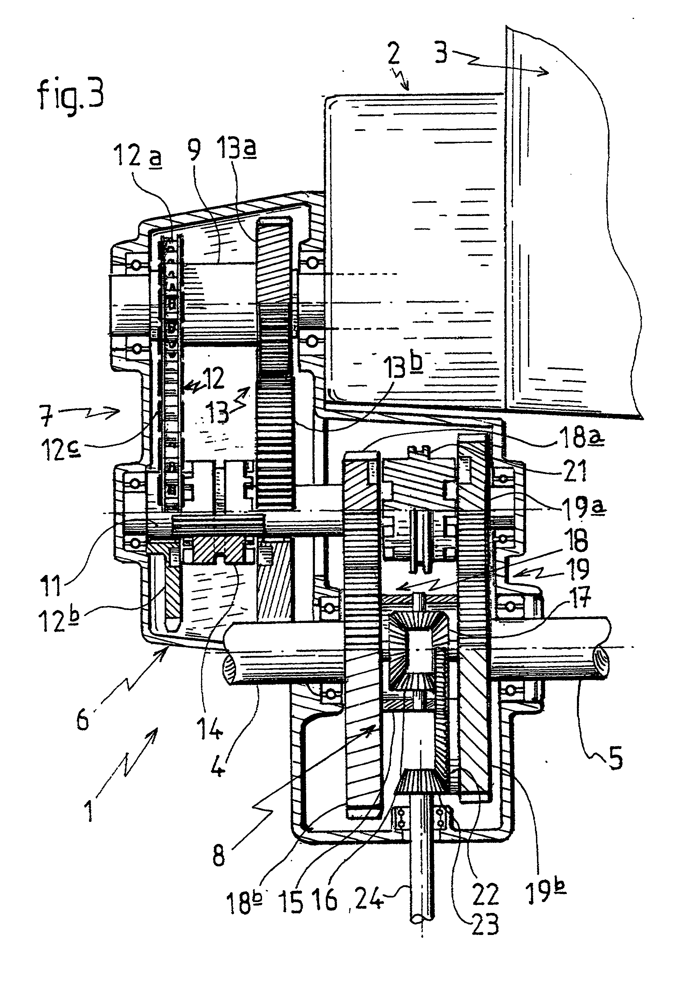

Le dispositif de transmission suivant l'invention, peut être également pourvu d'un arbre d'entraînement additionnel permettant d'obtenir un véhicule du type 4 X 4. Une telle variante d'exécution est représentée sur la figure 3. Sur cette figure on voit que la coquille 15 du différentiel 8 est solidaire d'une couronne dentée conique 22, fixée contre la face interne de l'un des pignons menés, en l'occurrence du pignon 19b. Avec cette couronne dentée conique 22 est en prise un pignon conique 23 solidaire d'un arbre de sortie 24 traversant la paroi du carter 6 et permettant d'entraîner une seconde paire de roues du véhicule.

Naturellement, tous les éléments rotatifs du dispositif de transmission 1 contenus à l'intérieur du carter 6 sont montés dans des paliers alignés prévus dans les parois du carter 6, comme on peut mieux le voir sur la figure 3.

## Revendications

1. Véhicule automobile à au moins trois roues dont deux roues motrices, dont la motorisation et la transmission sont réalisées à partir d'un moteur (3) et d'une boîte de vitesses de motocyclette (2) ne comportant pas de rapport inverseur pour produire la marche arrière du véhicule, dont le dispositif de transmission est monté entre la boîte de vitesses (2) accouplée au moteur de motocyclette (3) et au moins deux roues motrices à arbres transversaux coaxiaux (4,5) dudit véhicule automobile et il est constitué par un ensemble unitaire (1), comportant, à l'intérieur d'un seul et même carter (6), un inverseur de sens de rotation (7) ayant un arbre d'entrée (9) accouplé à l'arbre de sortie de la boîte de vitesses (2), un arbre intermédiaire cannelé (11) parallèle à l'arbre d'entrée (9) de l'inverseur (7), deux mécanismes de transmission de mouvement (12,13) entre l'arbre d'entrée (9) et l'arbre intermédiaire (11), les mécanismes de transmission (12,13) comportant respectivement un pignon menant (12a,13a) solidaire en rotation de l'arbre d'entrée (9), et un pignon mené (12b,13b) monté fou sur l'arbre intermédiaire cannelé (11), les mécanismes de transmission (12,13) étant agencés de telle façon que les pignons menés (12b,13b) tournent en sens inverse l'un de l'autre, un baladeur (14) monté coulissant sur l'arbre intermédiaire cannelé (11) entre les pignons menés (12b,13b) et pourvu de crabots permettant son accouplement avec l'un ou l'autre des pignons menés (12b,13b), un moyen pour faire coulisser dans un sens ou dans l'autre le baladeur (14) sur l'arbre intermédiaire cannelé (11), et un différentiel (8) dont la coquille (15), portant les satellites (16), est entraînée en rotation par l'arbre intermédiaire (11) et dont les planétaires (17) sont solidaires des arbres d'entraînement coaxiaux (4,5) traversant la paroi du carter (6).

2. Véhicule automobile suivant la revendication 1 **caractérisé en ce que** les mécanismes de transmission (12,13) de l'inverseur (7) sont respectivement constitués par une chaîne (12c) reliant les pignons menant (12a) et mené (12b) qui tournent par conséquent dans le même sens, et par une prise directe entre les pignons menant (13a) et mené (13b) qui tournent donc en sens inverse l'un de l'autre.

3. Véhicule automobile suivant l'une quelconque des revendications 1 ou 2 **caractérisé en ce que** l'arbre intermédiaire cannelé (11) est plus long que l'arbre d'entrée de l'inverseur du sens de rotation (7) pour s'étendre dans une partie du carter (6) dans laquelle est logé le différentiel (8).

4. Véhicule automobile suivant l'une quelconque des revendications 1 à 3 **caractérisé en ce que** le différentiel (8) est un composant d'une boîte de vitesses additionnelle à deux rapports de transmission.

5. Véhicule automobile suivant la revendication 4 **caractérisé en ce que** la boîte de vitesses additionnelle comprend un premier mécanisme de transmission (18) comprenant un premier pignon menant (18a), de petit diamètre, monté fou sur l'arbre intermédiaire cannelé (11) et en prise avec un premier pignon mené (18b) de plus grand diamètre solidaire d'un côté de la coquille (15) du différentiel (8), un second mécanisme de transmission (19) comprenant un second pignon menant (19a) monté fou sur l'arbre intermédiaire cannelé (11) et en prise avec un second pignon mené (19b) solidaire de l'autre côté de la coquille (15) du différentiel (8), un baladeur (21) monté coulissant sur l'arbre intermédiaire (11) et pourvu de crabots afin de pouvoir s'accoupler avec l'un ou l'autre des pignons menants (18a, 19a) et un moyen de commande du mouvement du coulissement du baladeur (21).

6. Véhicule automobile suivant l'une quelconque des revendications 1 à 5 **caractérisé en ce que** la coquille (15) du différentiel (8) est solidaire d'une couronne dentée conique en prise avec un pignon conique (23) solidaire d'un arbre d'entraînement (24) accouplé à une autre paire de roues du véhicule pour lui permettre un fonctionnement du type 4 X 4.

## Patentansprüche

1. Kraftfahrzeug mit mindestens drei Rädern, von denen zwei Räder angetrieben sind, bei dem die Motorisierung und die Übersetzung von einem Motorradmotor (3) und von einem Motorradgetriebe (2) ohne Rückwärtsgang zum Bewirken der Rückwärtsfahrt des Fahrzeugs erzielt werden, bei dem die Kraftübertragungsvorrichtung zwischen dem an den Motorradmotor (3) angekuppelten Getriebe und mindestens zwei angetriebenen Rädern mit koaxialen Querwellen (4,5) des Kraftfahrzeugs angebracht ist und bei dem sie von einer Konstruktionseinheit (1) gebildet wird, die im Inneren von ein und demselben Gehäuse (6) ein Drehrichtungsumkehrgetriebe (7) mit einer mit der Abtriebswelle des Getriebes (2) gekuppelten Eingangswelle (9), einer zur Eingangswelle (9) des Umkehrgetriebes (7) parallelen Hilfsverschiebewelle (11), zwei Bewegungsübertragungsmechanismen (12,13) zwischen der Eingangswelle (9) und der Hilfswelle (11), wobei die Übertragungsmechanismen (12,13) jeweils ein drehfest mit der Eingangswelle (9) verbundenes treibendes Ritzel (12a,13a) und ein beweglich auf der Hilfsverschiebewelle (11) angebrachtes getriebenes Ritzel (12b,13b) aufweisen, wobei die Übertragungsmechanismen (12,13) derart angeordnet sind, dass sich die getriebenen Ritzel (12b,13b) in zueinander entgegengesetzter Richtung drehen, einem Schubglied (14), das zwischen den getriebenen Ritzeln (12b,13b) verschiebbar auf der Hilfsverschiebewelle (11) angebracht und mit Klauen versehen ist, die sein Kuppeln mit dem einen oder mit dem anderen der getriebenen Ritzel (12b,13b) gestatten, und einer Einrichtung zum Verschieben des Schubgliedes (14) auf der Hilfsverschiebewelle (11) in der einen oder der anderen Richtung aufweist, sowie ein Differenzial (8), bei dem das Ausgleichsgehäuse (15), das die Ausgleichsräder (16) trägt, von der Hilfswelle (11) drehend angetrieben wird, und bei dem die Achswellenräder (17) fest mit den koaxialen Antriebswellen (4,5) verbunden sind, welche die Wand des Gehäuses (6) durchsetzen.

2. Kraftfahrzeug nach Anspruch 1, **dadurch gekennzeichnet, dass** die Übertragungsmechanismen (12,13) des Umkehrgetriebes (7) von einer Kette (12c), die das treibende (12a) und das getriebene (12b) Ritzel verbindet, welche sich folglich in derselben Richtung drehen, bzw. von einem direkten Zahneingriff zwischen dem treibenden (13a) und dem getriebenen (13b) Ritzel, welche sich somit in zueinander entgegengesetzter Richtung drehen, gebildet werden.

3. Kraftfahrzeug nach einem der Ansprüche 1 oder 2, **dadurch gekennzeichnet, dass** die Hilfsverschiebewelle (11) länger ist als die Eingangswelle des Drehrichtungsumkehrgetriebes (7), um sich in einen Teil des Gehäuses (6) zu erstrecken, in dem das Differenzial (8) untergebracht ist.

4. Kraftfahrzeug nach einem der Ansprüche 1 bis 3, **dadurch gekennzeichnet, dass** das Differenzial (8) Bestandteil eines zusätzlichen Getriebes mit zwei Übersetzungsverhältnissen ist.

5. Kraftfahrzeug nach Anspruch 4, **dadurch gekennzeichnet, dass** das zusätzliche Getriebe umfasst: einen ersten Übertragungsmechanismus (18), umfassend ein erstes treibendes Ritzel (18a) mit kleinem Durchmesser, das beweglich auf der Hilfsverschiebewelle (11) angebracht ist und mit einem ersten getriebenen Ritzel (18b) mit größerem Durchmesser im Zahneingriff steht, das fest mit einer Seite des Ausgleichsgehäuses (15) des Differenzials (8) verbunden ist, einen zweiten Übertragungsmechanismus (19), umfassend ein zweites treibendes Ritzel (19a), das beweglich auf der Hilfsverschiebewelle (11) angebracht ist und mit einem zweiten getriebenen Ritzel (19b) im Zahneingriff steht, das fest mit der anderen Seite des Ausgleichsgehäuses (15) des Differenzials (8) verbunden ist, ein Schubglied (21), das verschiebbar auf der Hilfswelle (11) angebracht und mit Klauen versehen ist, damit es sich mit dem einen oder dem anderen der treibenden Ritzel (18a,19a) kuppeln lässt, sowie eine Einrichtung zum Steuern der Verschiebebewegung des Schubgliedes (21).

6. Kraftfahrzeug nach einem der Ansprüche 1 bis 5, **dadurch gekennzeichnet, dass** das Ausgleichsgehäuse (15) des Differenzials (8) fest mit einem Kegelzahnkranz verbunden ist, der mit einem Kegelritzel (23) im Zahneingriff steht, das fest mit einer Antriebswelle (24) verbunden ist, welche mit einem anderen Paar von Rädern des Fahrzeugs gekuppelt ist, um ihm einen 4 x 4-Betrieb zu ermöglichen.

## Claims

1. Automobile vehicle with at least three wheels, two of which are drive wheels, whose motorisation and transmission are effected by a motorcycle engine (3) and gear box (2) having no reverse ratio to move the vehicle in reverse, the transmission mechanism of which is mounted between the gear box (2) coupled to the motorcycle engine (3) and at least two drive wheels with transverse, coaxial axles (4, 5) of the said automobile vehicle, and constituted by a unitary assembly (1) comprising, inside one and the same housing (6), a rotation direction inverter (7) having an input shaft (9) coupled to the output shaft of the gear box (2), a splined intermediate shaft (11) parallel to the input shaft (9) of the inverter (7), two mechanisms (12, 13) for transmitting movement between the input shaft (9) and the intermediate shaft (11), the said transmission mechanisms (12, 13) comprising respectively a drive pinion (12a, 13a) solidly attached to the input shaft (9) in a rotational movement, and a driven pinion (12b, 13b) mounted loosely on the splined intermediate shaft (11), the said transmission mechanisms (12, 13) being arranged in such manner that the driven pinions (12b, 13b) rotate in opposite directions to one another, with a sliding ring gear (14) mounted on the splined intermediate shaft (11) between the driven pinions (12b, 13b) and provided with pawls enabling it to be coupled with one or other of the driven pinions (12b, 13b), means to slide the sliding ring gear (14) one way or the other along the splined intermediate shaft (11), and a differential (8) whose housing (15), which has satellites (16), is driven in rotation by the intermediate shaft (11) and has planetaries (17) solidly attached to the coaxial drive axles (4, 5) passing through the wall of the housing (6).

2. Automobile vehicle according to Claim 1,
**characterised in that**
the transmission mechanisms (12, 13) of the inverter (7) consist respectively of a chain (12c) connecting the drive pinion (12a) and the driven pinion (12b), which consequently rotate in the same direction, and direct engagement between the drive pinion (13a) and the driven pinion (13b), which consequently rotate in directions opposite to one another.

3. Automobile vehicle according to either of Claims 1 or 2,
**characterised in that**
the splined intermediate shaft (11) is longer than the input shaft of the rotation direction inverter (7) and extends into part of the housing (6) in which the differential (8) is located.

4. Automobile vehicle according to any of Claims 1 to 3,
**characterised in that**
the differential (8) is a component of an additional gear box with two transmission ratios.

5. Automobile vehicle according to Claim 4,
**characterised in that**
the additional gear box comprises a first transmission mechanism (18) comprising a first drive pinion (18a) of small diameter, mounted loosely on the splined intermediate shaft (11) and engaged with a first driven pinion (18b) of larger diameter attached solidly on one side of the housing (15) of the differential (8), a second transmission mechanism (19) comprising a second drive pinion (19a) mounted loosely on the splined intermediate shaft (11) and engaged with a second driven pinion (19b) attached solidly on the other side of the housing (15) of the differential (8), a sliding ring gear (21) mounted on the intermediate shaft (11) and provided with pawls enabling it to couple to one or other of the drive pinions (18a, 19a), and means to control the sliding movement of the ring gear (21).

6. Automobile vehicle according to any of Claims 1 to 5,
**characterised in that**
the housing (15) of the differential (8) is solidly attached to a conical crown gear engaged with a conical pinion (23) solidly attached to a drive shaft (24) coupled to another pair of the vehicle's wheels, so as to confer upon it a 4 x 4 type operation.
